# EUROPEAN PATENT SPECIFICATION

(11) **EP 1 408 254 B1**
(45) Date of publication and mention of the grant of the patent: **15.08.2007**
(21) Application number: 02425608.3
(22) Date of filing: 09.10.2002
(51) Int. Cl.: F16H 7/08

(54) **External ratchet device for cartridge type hydraulic tensioner**
Externer Schnappverschluss für eine kassettenartige, hydraulische Spannvorrichtung
Cliquet d'arrêt externe pour tendeur hydraulique du type cartouche

(43) Date of publication of application: 14.04.2004
(73) Proprietor: Morse Tec Europe S.r.l., 20121 Milano (IT)
(72) Inventor: Redaelli, Daniele, 23807 Merate (LC) (IT)
(74) Representative: Petruzziello, Aldo

(56) References cited:
- EP-A- 0 867 637
- EP-A- 0 985 849
- EP-A- 1 138 979
- EP-A- 1 188 955
- DE-C- 19 680 418
- US-A- 4 790 796

## Description

The present invention relates to the field of devices for providing and maintaining tension in flexible drive transmission means, such as belts and chains.

Reference will be made in particular to drive chains on vehicles, such as are used to transmit drive from a first driving sprocket, driven by the vehicle engine, to a second driven sprocket, which moves the cam shaft.

For reasons of adjustment, wear on materials, and take-up of play, it is often necessary to compensate for a certain slack in the chain and this is done by means of shoe tensioners, wherein the shoe is pushed with an adjustable force against a branch of the chain.

To obtain the thrust on the shoe, a majority of the tensioners known to the art comprise a cylinder-piston assembly, wherein the fixed member (generally the cylinder) is mounted on the engine block and the movable member (generally the piston) acts on the shoe under the action of a spring and hydraulic fluid, generally oil. In some known tensioners, the piston is hollow, that is , it has a piston chamber which receives a vent disc axially slidable therein. The vent disc has a thin spiral groove on the surface thereof facing toward the bottom of the piston, and the bottom of the piston has a through hole. Position adjustment between the vent disc and the bottom of the piston allows any air to be released and if necessary oil to be released for purposes of lubrication and to control the elastic damping characteristics of the tensioner. The spring acts between the cylinder and the disc and through the disc acts on the piston.

Some tensioners comprise a so-called "no-return" device, able to prevent the return of the piston into the cylinder if the oil pressure drops for contingent reasons and the action of the spring is not sufficient to keep the piston in the correct position. The no-return device generally consists of a longitudinal rack, or toothed portion, integral with the piston, which is engaged by a spring biased ratchet.

EP-A-00830616.9 describes a tensioner of the so-called cartridge type (those tensioners that can be applied from the outside to the engine block or head, without the need to open the engine are called "cartridge type), wherein the rack portion is formed in the skirt of the piston, and the ratchet is received in an opening in the skirt of the piston, with the possibility of axial sliding, and biased against the piston by a circular piston ring. For purposes of storage and shipping, before the piston is installed, it is retained in a resting position, wherein only a small portion thereof protrudes from the cylinder, by the engagement of a piston ring with an annular cavity of the cylinder and with an annular cavity of the piston.

For installation of the tensioner it is necessary initially to apply a force to the piston that causes it to retract inside the cylinder for a sufficient distance to move the retaining ring into a wider annular cavity of the cylinder, so that said ring frees the piston. Although the solution proposed by the above mentioned application is satisfactory for many applications, it nevertheless is not suitable for those cases in which it is not possible or easy to apply said retraction force to the piston head.

EP 02425131.6 by the same applicant, not yet published, describes an cartridge type tensioner with a no return teeth on the skirt of the piston, wherein the piston is kept in the retracted condition by means of a screw which initially engages the shaft of a vent device slidable inside the piston. This previous application solves the problem of initially retaining the piston; however, once the retaining screw has been unscrewed, it is not possible to engage it again with the shaft of the vent device except by acting on the piston head.

US 4,790,796 , which discloses the features of the preamble of claim 1, describes a free-piston type auto-tensioner comprising a body, a plunger provided with a rod acting on tensioning means for a timing belt and slidably disposed in the body to form a first oil chamber, a free piston slidably disposed in the body to form a second oil chamber, an oil passage formed in the plunger head to establish an oil communication between the first oil chamber and the second oil chamber, a check valve disposed in the oil passage, a first spring biasing the plunger and a second spring biasing the free piston.

The object of the present application is to obtain a cartridge type tensioner with a no-return device and retaining device, wherein the retaining device can be operated from the outside.

Said object has been achieved with a tensioner as stated in claim 1. Further new and useful characteristics are disclosed in the subsequent claims.

In other words, the cartridge type hydraulic tensioner of the present invention comprises a body, a piston slidable in said body, a rod member longitudinally slidable inside body and for a certain distance with respect to the piston and in engagement therewith, a biasing spring between the piston and the rod member, a retaining and no-return toothed portion on said rod member, a locking pawl spring biased inside the body to engage the toothed portion and lock the rod member against any possibility of return. The tensioner further comprises a passageway for operating fluid which opens into a piston chamber which receives the spring and is closed by a check valve. One end of the rod member protrudes from the body and can be engaged by a clip to hold the rod in the retracted condition.

The new tensioner allows the piston to be kept retracted in the cylinder body, by blocking a tail or end of the toothed rod, which protrudes from the body, by means of the retaining clip or the like. Furthermore it is easy to use and can easily be restored to the initial condition.

An embodiment will be described hereunder purely by way of non-limiting example, with reference to the attached drawings, wherein:

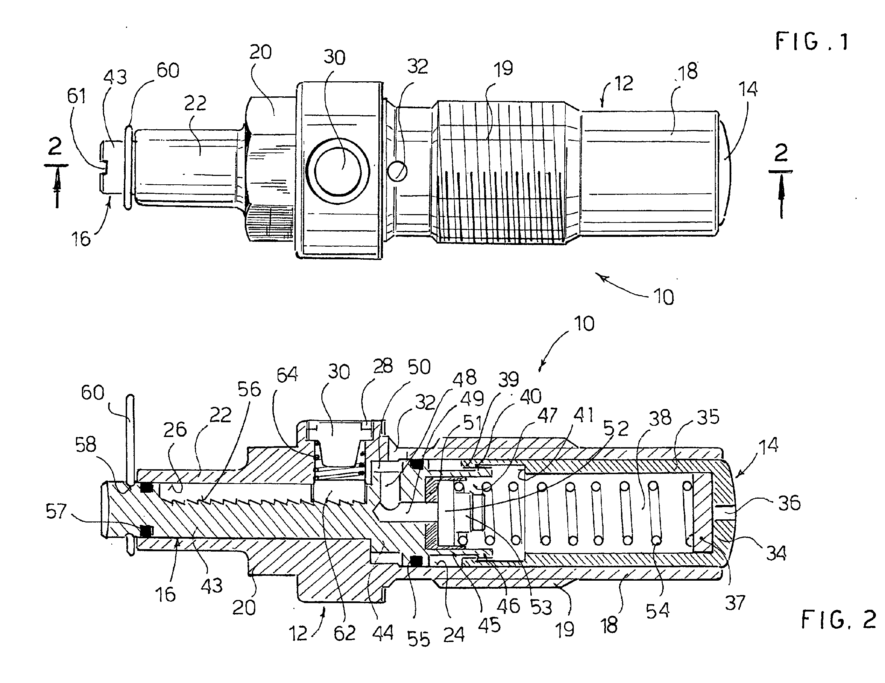

Figure 1 is a side view of a cartridge type hydraulic tensioner of the invention, shown in the retracted storage and transport condition,
Figure 2 is a section along the longitudinal plane 2-2 of Figure 1.

In the figures, a cartridge type hydraulic tensioner according to the invention is denoted as a whole with reference numeral 10 and comprises a body 12, forming a cylinder, a hollow piston 14, and a rod member 16.

The body 12 is elongated in shape, has a cylinder part 18, which has a threaded portion 19 on the outside, a nut part 20 so as to be able to be screwed into an engine block in a per se known manner, and a tube part 22. On the inside the body forms a cylinder chamber 24, axial and open at one end of the body, and a tube chamber 26, axial and open at the other end of the body, aligned and communicating with the cylinder chamber. A side opening 28 of the body is closed by a removable cover 30, a further side opening is denoted by reference numeral 32.

The hollow piston 14 has a bottom 34 and a cylindrical sleeve 35. The bottom preferably has a convex shape and an axial through hole 36, which cooperates with a disc 37 to obtain a controlled air vent, in a per se known manner which is therefore not described further. The piston sleeve 35 forms on the inside a piston chamber 38, which has a portion that is widened or has a larger diameter 38' defined by end teeth or protrusions 39, so as to define axially opposite shoulders 40 and 41. The piston is axially slidable inside the cylinder chamber.

The rod member 16 has a shaft 43 and a head 44 in one piece, and is disposed in the body coaxially thereto. The head 44 is received in the cylinder chamber against which it is held by means of a gasket 55, preferably an O-ring, and has a cup-shaped part with a cylindrical sleeve 45 with outward protruding teeth or projections 46, and defines a chamber of the head of the rod, 47. A communicating transverse passageway 48 and axial passageway 49, in the head of the rod, connect the chamber of the head with a space 50 defined between the outer surface of the head of the rod and the facing surface of an end part of the cylinder chamber, wherein the above mentioned opening opens. A check valve 53 is applied to the outlet of the passageway 49, by means of a bottom gasket 51 and a washer 52. A pressure spring 54, received in the cylinder chamber and in the head chamber, acts between the washer 52 and the disc 37.

The shaft 43 of the rod member has a longitudinal toothed portion 56, hereafter also called a rack, with teeth having a less steep flank towards the head of the rod and a steeper flank towards the opposite end of the rod. The toothed portion occupies a considerable longitudinal stretch of the shaft and only a part of the circumference thereof. The end of the shaft opposite the head has a seal 57, preferably an O-ring, to make it tight against the wall of the tube chamber, and preferably has a circular groove 58, to receive a retaining clip, 60. A notch 61 on the outermost surface of the shaft is provided for engagement of a screwdriver.

A toothed no-return shoe or pawl 62 is biased against the toothed portion 56 by a biasing spring 64, which rests in opposition against the above mentioned cover 30.

As already stated, at rest, that is in the storage or shipping condition, the rod 16 is locked in the retracted position of the figures, by means of the clip 60. Reciprocal engagement of the projections 39 of the cylinder and 46 of the rod member retains the piston 14 in the retracted position inside the cylinder, despite the force exerted by the spring 54.

When the clip 60 is removed, and the opening 32 is connected to the oil circuit of the engine, the action of the pressure in the space 50 moves the rod and piston assembly toward the right and allows the piston to extend from the cylinder, with the possibility of returning elastically as conceded by the spring 54. The position of the piston will be established according to the conditions of equilibrium of the forces exerted thereon by the chain to be tensioned (not illustrated), by the spring 54, and by the fluid under pressure. Extension of the piston pulls the rod member 16, which provides a locking action against re-entry, or a no-return action, thanks to the teeth 56 engaged by the pawl 62.

To restore the initial position, it is possible to operate with a screwdriver on the notch 61 and turn the shaft bringing the cylindrical part thereof into contact with the pawl 62, after which the shaft can be made to slide along the pawl to restore the initial position.

## Claims

1. A cartridge type hydraulic tensioner for drive belts/chains, comprising a body (12), and a piston (14), the body **(12)** having a cylindrical part **(18)**, with a cylinder chamber (24) which receives said piston **(14)** in an axially slidable manner between an extreme retracted position and an extended position, said piston **(14)** being hollow and spring biased towards the extended position; wherein
- the hollow piston (**14**) forms a piston chamber (**38**);
- the body (**12**) further comprises a tube part (**22**), coaxial with the cylinder part (**18**), including an axial tube chamber (**26**), aligned with the cylinder chamber (**24**) and communicating therewith, wherein a rod member (**16**) having an integral head (**44**) and a shaft **(43)** moves;
- the head (**44**) has a passageway **(48, 49)** for an operating fluid, the head **(44)** cooperates with the piston **(14)** for an axial movement with play thereof and is tight against the cylinder chamber **(24)** of the body; **characterised in that :** the passageway (**48, 49**) connects the piston chamber (**38**) with a side opening (32) provided on the casing of the body (**12**) ;
- the shaft (**43**) extends axially in the tube chamber (**26**) of the body (**12**); and
- means (**60**) **are** provided to mechanically lock the shaft **(43)** in the retracted position inside the body **(12)**.

2. A tensioner according to claim 1, **characterised in that** said shaft (43) of the rod member (**16**) is received slidably in the tube part **(22)**; **in that** said shaft **(43)** has a toothed portion with no-return check teeth (56), extending for a portion of the length thereof and for a portion of circumference, and **in that** a no-return pawl (62) is received slidably in said body **(12)** spring biased against said teeth **(56)** so as to allow sliding of the shaft **(43)** in only one direction.

3. A tensioner according to claim 1, **characterised in that** the shaft **(43)** has a peripheral groove **(58)** in the opposite end to the head **(44)**, for locking engagement with a clip (60).

4. A tensioner according to claim 1, **characterised in that** the head (44) of the rod member **(16)** has a cup-shaped part whereof the sleeve (45) forms projections (46) which engage with cooperating projections (39) or shoulders (40, 41) of the piston (14) to allow a limited reciprocal axial movement of the rod member (16) and of the piston (14), a biasing spring (54) being provided therebetween.

5. A tensioner according to claim 1 **characterised in that** the head (44) of the rod member (16) has through passageways (48, 49) for the operating fluid and a check valve (53).

6. A tensioner according to claim 2, **characterised in that** the rod member (16) is rotatable around its longitudinal axis, between a position wherein the no-return retaining teeth (56) are active and engaged by the pawl (62) and a position wherein said teeth (56) are inactive and disengaged from the pawl (62).

## Patentansprüche

1. Kassettenartige, hydraulische Spannvorrichtung für Antriebsriemen/-Ketten, die einen Körper (12) und einen Kolben (14) umfasst, wobei der Körper (12) mit einem zylindrischen Teil (18) mit einer Zylinderkammer (24) ausgestattet ist, die den Kolben (14) axial zwischen einer vollständig zurückgezogenen Position und einer ausgefahrenen Position verschiebbar aufnimmt, wobei der Kolben (14) hohl ausgeführt und in der ausgefahrenen Position vorgespannt ist, wobei
- der hohl ausgeführte Kolben (14) eine Kolbenkammer (38) ausbildet,
- der Körper (12) ferner ein Rohrteil (22) umfasst, das koaxial zu dem Zylinderteil (18) liegt, eine axiale Rohrkammer (26) enthält, zu der Zylinderkammer (24) ausgerichtet ist und mit dieser kommuniziert, in der sich ein Stangenelement (16) bewegt, das mit einem einstückig ausgeführten Kopf (44) und einer Welle (43) ausgestattet ist,
- der Kopf (44) mit einem Durchgang (48, 49) für ein Betriebsmittel ausgestattet ist, der Kopf (44) mit dem Kolben (14) zum Ausführen seiner axialen Bewegung mit Spiel zusammenwirkt und gegen die Zylinderkammer (24) des Körpers abgedichtet ist,
**dadurch gekennzeichnet, dass**
- der Durchgang (48, 49) die Kolbenkammer (38) mit
einer Seitenöffnung (32) verbindet, die an dem Gehäuse des Körpers (12) bereitgestellt ist,
- die Welle (43) axial in die Rohrkammer (26) des Körpers (12) reicht, und
- ein Mittel (60) bereitgestellt ist, um die Welle (43) in der zurückgezogenen Position in dem Körper (12) mechanisch zu verriegeln.

2. Spannvorrichtung nach Anspruch 1, **dadurch gekennzeichnet, dass** die Welle (43) des Stangenelementes (16) verschiebbar in dem Rohrteil (22) aufgenommen wird, dass die Welle (43) mit einem gezahnten Abschnitt mit Sperrzähnen (56) ausgestattet ist, der über einen Teil ihrer Länge und über einen Teil des Umfangs reicht, und dass eine Sperrklinke (62) verschiebbar in dem Körper (12) gegen die Zähne (56) vorgespannt aufgenommen ist, so dass die Welle (43) in nur einer Richtung verschiebbar ist.

3. Spannvorrichtung nach Anspruch 1, **dadurch gekennzeichnet, dass** die Welle (43) mit einer peripheren Nut (58) an dem Kopf (44) gegenüberliegenden Ende ausgestattet ist, um mit einer Klammer (60) in einen Feststelleingriff gebracht zu werden.

4. Spannvorrichtung nach Anspruch 1, **dadurch gekennzeichnet, dass** der Kopf (44) des Stangenelementes (16) mit einem tassenförmigen Teil ausgestattet ist, dessen Hülle (45) Vorsprünge (46) ausbildet, die mit zusammenwirkenden Vorsprüngen (39) oder Schultern (40, 41) des Kolbens (14) in Eingriff stehen, damit eine begrenzte wechselseitige axiale Bewegung des Stangenelementes (16) und des Kolbens (14) möglich ist, wobei eine Vorspannfeder (54) dazwischen bereitgestellt ist.

5. Spannvorrichtung nach Anspruch 1, **dadurch gekennzeichnet, dass** der Kopf (44) des Stangenelementes (16) mit Durchgängen (48, 49) für das Betriebsmittel und einem Rückschlagventil (53) ausgestattet ist.

6. Spannvorrichtung nach Anspruch 2, **dadurch gekennzeichnet, dass** das Stangenelement (16) um seine Längsachse zwischen einer Position, in der die Sperrzähne (56) aktiviert sind und von einer Sperrklinke (62) in Eingriff genommen sind, und einer Position, in der die Zähne (56) inaktiv sind und von der Sperrklinke (62) gelöst sind, drehbar ist.

## Revendications

1. Tendeur hydraulique du type cartouche pour des courroies/chaînes d'entraînement, comprenant un corps (12), et un piston (14), le corps (12) ayant une partie cylindrique (18), avec une chambre de cylindre (24) qui reçoit ledit piston (14) de manière à pouvoir coulisser axialement entre une position rétractée extrême et une position étendue, ledit piston (14) étant creux et polarisé par ressort vers la position étendue ; dans lequel
- le piston creux (14) forme une chambre de piston (38) ;
- le corps (12) comprend en outre une partie de tube (22), coaxiale à la partie de cylindre (18), comprenant une chambre de tube axiale (26), alignée avec la chambre de cylindre (24) et communiquant avec celle-ci, dans lequel un membre de tige (16) ayant une tête intégrale (44) et un arbre (43) se déplace ;
- la tête (44) a une voie de passage (48, 49) pour un fluide d'actionnement, la tête (44) coopère avec le piston (14) pour un mouvement axial avec du jeu de celle-ci et est serrée contre la chambre de cylindre (24) du corps ; **caractérisé en ce que** la voie de passage (48, 49) connecte la chambre de piston (38) à une ouverture latérale (32) fournie sur le carter du corps (12) ;
- l'arbre (43) s'étend axialement dans la chambre de tube (26) du corps (12) ; et
- des moyens (60) sont fournis pour verrouiller mécaniquement l'arbre (43) dans la position rétractée à l'intérieur du corps (12).

2. Tendeur selon la revendication 1, **caractérisé en ce que** ledit arbre (43) du membre de tige (16) est reçu de manière à pouvoir coulisser dans la partie de tube (22) ; **en ce que** ledit arbre (43) a une portion dentée avec des dents de contrôle anti-retour (56), s'étendant sur une portion de la longueur de celui-ci et sur une portion de la circonférence, et **en ce qu'**un cliquet anti-retour (62) est reçu de manière à pouvoir coulisser dans ledit corps (12) polarisé par ressort contre lesdites dents (56) pour permettre à l'arbre (43) de coulisser dans une seule direction.

3. Tendeur selon la revendication 1, **caractérisé en ce que** l'arbre (43) a une gorge périphérique (58) à l'extrémité opposée à la tête (44), pour verrouiller la mise en prise avec une pince (60).

4. Tendeur selon la revendication 1, **caractérisé en ce que** la tête (44) du membre de tige (16) a une partie en forme de coupe de laquelle le manchon (45) forme des projections (46) qui se mettent en prise avec des projections (39) en coopération ou des épaules (40, 41) du piston (14) pour permettre un déplacement axial de va-et-vient limité du membre de tige (16) et du piston (14), un ressort de polarisation (54) étant fourni entre celles-ci

5. Tendeur selon la revendication 1, **caractérisé en ce que** la tête (44) du membre de tige (16) a des voies de passage traversant (48, 49) pour le fluide d'actionnement et un clapet anti-retour (53).

6. Tendeur selon la revendication 2, **caractérisé en ce que** le membre de tige (16) peut tourner autour de son axe longitudinal, entre une position à laquelle les dents de rétention anti-retour (56) sont actives et mises en prise par le cliquet (62) et une position à laquelle lesdites dents (56) sont inactives et mises hors prise du cliquet (62).
